# EUROPÄISCHE PATENTSCHRIFT

(11) **EP 2 861 368 B1**
(45) Veröffentlichungstag und Bekanntmachung des Hinweises auf die Patenterteilung: **28.04.2021**
(21) Anmeldenummer: 13728969.0
(22) Anmeldetag: 10.06.2013
(51) Int. Cl.: B23F 5/12, B23F 5/16

(54) **VERFAHREN ZUM ERZEUGEN EINER VERZAHNUNG UND MIT DIESEM VERFAHREN BETRIEBENE VERZAHNUNGSMASCHINE**
METHOD FOR GENERATING A GEAR TOOTH SYSTEM, AND A GEAR CUTTING MACHINE THAT IS OPERATED USING SAID METHOD
PROCÉDÉ POUR GÉNÉRER UNE DENTURE ET MACHINE À FORMER LES DENTURES FONCTIONNANT AU MOYEN DE CE PROCÉDÉ

(30) Priorität: 19.06.2012 DE 102012012617
(43) Veröffentlichungstag der Anmeldung: 22.04.2015
(73) Patentinhaber: Gleason-Pfauter Maschinenfabrik GmbH, 71636 Ludwigsburg (DE)
(72) Erfinder: KRESCHEL, Jürgen, 71679 Asperg (DE); KOBIALKA, Claus, 71672 Marbach a. N. (DE)
(74) Vertreter: Leinweber & Zimmermann
(86) Internationale Anmeldenummer: PCT/EP2013/001695
(87) Internationale Veröffentlichungsnummer: WO 2013/189574

(56) Entgegenhaltungen:
- WO-A1-02/45895
- WO-A1-2006/133864
- US-A- 3 738 225
- LANGE J: "INNOVATIVE CNC GEAR SHAPING", GEAR TECHNOLOGY, RANDALL PUBLISHING CO. ELK GROVE, ILLINOIS, US, Bd. 11, Nr. 1, 28. Februar 1994 (1994-02-28), Seiten 16-29, XP000425630, ISSN: 0743-6858

## Beschreibung

Die Erfindung betrifft ein Verfahren zum Erzeugen einer Verzahnung, bei dem ein zu verzahnendes Werkstück und ein spanabhebendes Werkzeug wälzend einander zugestellt werden, bis jede Flanke der Verzahnung nach mehreren Durchgängen des Werkzeugs erzeugt ist, wobei in jedem Durchgang eine mindestens einen Flankenschnitt aufweisende Schnittfläche am Werkstück erzeugt wird, sowie eine zur Durchführung dieses Verfahrens gesteuerte Verzahnungsmaschine.

Derartige spanabhebende Wälzverfahren sind bekannt, insbesondere fallen darunter die mit einem zahnradförmigen Werkzeug betriebenen abwälzenden/generierenden Verfahren, wie beispielsweise das Wälzstoßen oder Wälzschälen. Bei diesen Verfahren werden die Zahnflanken, bei welchen es sich nicht um die Flankenendgeometrie der fertiggestellten Verzahnung handeln muss - üblicherweise wird bei dem spanabhebenden Verfahren noch ein Aufmaß für die spätere Feinbearbeitung belassen - in mehreren Durchgängen erzeugt, die sich durch eine unterschiedliche Zustelltiefe unterscheiden. Startet man beispielsweise von einem Werkstückrohling, wird üblicherweise zunächst in einem ersten Durchgang mit einer ersten Zustelltiefe Material abgetragen, so dass eine symmetrisch zur späteren Zahnlückenmitte der Verzahnung gebildete erste Schnittfläche erzeugt wird, anhand der erkennbar ist, wieviel Material im ersten Durchgang abgetragen wurde.

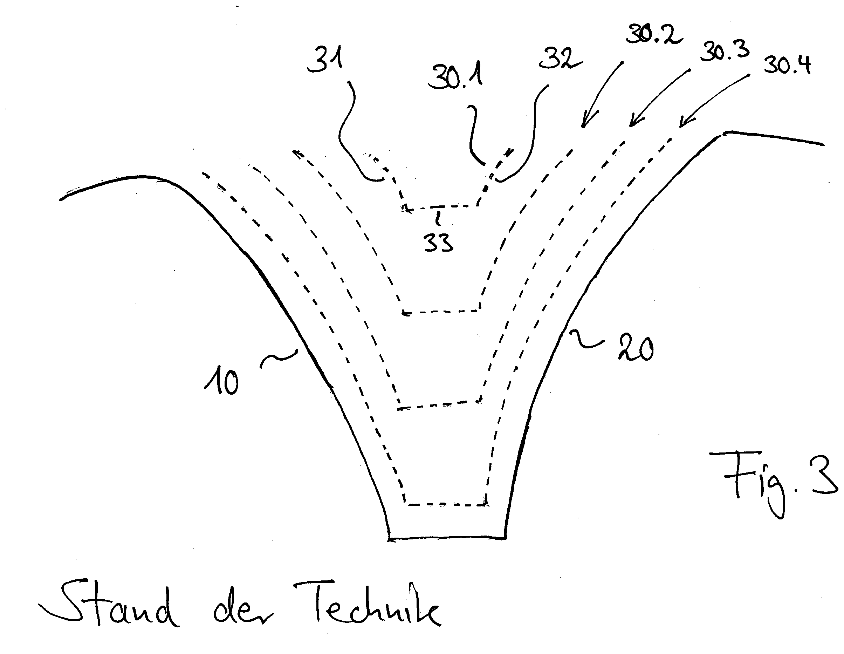

Dies ist in Fig. 3 schematisch in einer orthogonal zur Werkstückdrehachse genommenen Schnitt dargestellt. In dieser Ansicht bezeichnet das Bezugszeichen 10 die nach dem letzten Durchgang herzustellende, bei dieser Bearbeitung nachlaufende Zahnflanke und das Bezugszeichen 20 entsprechend die einlaufende Zahnflanke. Die Zahnlückenform des fertiggestellten Werkstückes nach späterer Feinbearbeitung, zu deren Erreichen ausgehend von den Zahnflanken 10, 20 noch ein Aufmaß q abzutragen ist, ist nicht dargestellt.

Aus dieser Darstellung erkennt man weiter, dass die Schnittfläche 30.1 des ersten Durchgangs einen (nachlaufenden) Flankenschnitt 31, einen Kopfschnitt 33 und einen (einlaufenden) Flankenschnitt 32 aufweist. Der Abstand zwischen dem Bodenschnitt 33 und der nicht eingezeichneten vorhergehenden Werkstückrohlingoberfläche ist ein Maß für die Zustellung im ersten Durchgang.

Im zweiten Durchgang wird die Zustellung erhöht, so dass sich durch weiteren spanenden Materialabtrag der Wälzbewegung die Schnittfläche 30.2 bildet, welche ebenfalls zwei Flankenschnitte und einen Kopfschnitt aufweist.

Die Anzahl der Durchgänge wird üblicherweise so gesteuert, dass sich in jedem Durchgang der gewünschte Materialabtrag ergibt. In dem schematisch gezeigten Beispiel aus dem bekannten Stand der Technik erfolgt die Bearbeitung in fünf Durchgängen, deren erste vier zu den Schnittflächen 30.1, 30.2, 30.3 und 30.4 führen, während im letzten Durchgang die Flanken 10, 20 gebildet werden, die entsprechende Schnittfläche entspricht damit den Hüllschnitten der erzeugten Verzahnungsflanken. Im Hinblick auf eine möglichst hohe Werkzeugstandzeit wird zudem eine nahezu symmetrische Belastung der einlaufenden und auslaufenden Flanken des Verzahnungswerkzeuges angestrebt. Dies äußert sich beispielsweise in einem Diagramm, in dem die Spandicken der bei Bildung einer Zahnlücke auftretenden Späne über der Schneidkantenlänge eines Werkzeugzahns aufsummiert sind. In einem solchen Diagramm zeigt sich ein vom Bereich der Kopfschneidkante des Werkzeugs zu beiden Flankenseiten hin im wesentlichen symmetrischer Verlauf.

Trotz dieser bei der Wälzbearbeitung erreichbarer nahezu symmetrischer Belastung der einlaufenden und auslaufenden Flanke und der sich daraus ergebenden höheren Werkzeugstandzeit liegt der Erfindung die Aufgabe zugrunde, ein Verfahren der eingangs genannten Art diesbezüglich nochmals zu verbessern.

US 3 738 225 A offenbart ein Verfahren gemäß dem Oberbegriff von Anspruch 1.

In verfahrenstechnischer Hinsicht wird diese Aufgabe mit den Merkmalen von Anspruch 1 erreicht.

Im Rahmen der Erfindung ist man zu der Erkenntnis gelangt, dass sich mit dem erfindungsgemäßen Verfahren eine gesteigerte Werkzeugstandzeit ergibt. Man verringert die Zahl der trotz der oben erläuterten Symmetrisierungsstrategie weiterhin erzeugten 3-Flanken-Späne (d.h. Späne, die aus einem gleichzeitigen Materialabtrag von beiden Flanken und Fuß der in diesem Durchgang erzeugten Lücke hervorgehen, auch U-Späne genannt) unter Betrachtung des Verschleißes aufgrund einer relevanten schneidkantennahen Spanablaufzone.

Mit der erfindungsgemäßen, der Wälzbewegung überlagerten Zusatzbewegung wird ein Zusammenhang zwischen zwei in aufeinanderfolgenden Durchgängen erzeugten Flankenschnitten bewirkt, wodurch die Erzeugung U-förmiger Späne auf ein Minimum reduziert wird. Das Werkzeug wird entlang des im vorangegangenen Durchgang erzeugten Flankenschnitts geführt und wird während dieser Führung im wesentlichen nicht mehr spanend schneiden, wenn der Werkzeugzahn in die in diesem Durchgang zu bildende Lücke des Werkstückes eintaucht. Das bedeutet, dass die von der geführten Schneidkante bewirkte Spanung effektiv gegen Null Spanungsdicke geht, die Spanungsdicke hier also jedenfalls geringer als eine durch die Schneidkantenverrundung definierte Grenzspannungsdicke ist.

Insbesondere ist daran gedacht, derartige Zusammenhänge zwischen den Flankenschnitten aufeinanderfolgender Durchgänge für mehrere, insbesondere alle aufeinanderfolgenden Durchgänge zu bilden, wodurch eine verlängerte Führung erreicht wird und ein immer größerer Bereich der Schneidkante des Werkzeuges effektiv keine Spanleistung bei immer späteren Durchgängen mehr liefert. Dennoch erhöht sich die Werkzeugstandzeit aufgrund der insgesamt vorteilhafteren Spanerzeugung. Die erzeugten Verzahnungsflanken können noch nachbearbeitet werden. So kann beispielsweise in n=2 Durchgängen eine erste Verzahnungsflanke erzeugt werden, mit den zusammenhängenden Flankenschnitten, und in anschließenden m≥1 Durchgängen das Werkstück ohne die Zusatzbewegung bearbeitet werden.

Um den mit der erforderlichen Zusatzbewegung verbundenen Einfluss auf den Verfahrensablauf des Wälzverfahrens gering zu halten, wird es bevorzugt, zwei aufeinanderfolgende Zusammenhänge (also über wenigstens drei aufeinanderfolgende Durchgänge erzeugt) an der Seite der gleichen Flanke zu bilden. Dadurch sind die im jeweiligen Durchgang erforderlichen tangential wirkenden Zusatzbewegungen einander bezüglich einer Zusatzbewegung Null nicht entgegengesetzt, sondern nur deren Betrag wird geändert.

Bevorzugt ist/sind der/die zusammenhängende(n) Flankenschnitt(e) an den bei der Bearbeitung nachlaufenden Flanken gebildet. Bei gegebener Steifigkeit des Zerspansystems erhält man dadurch insbesondere bei Geradverzahnungen eine sich qualitätssteigernd auswirkende gleichgerichtete Tangentialkraft. Bei der Bearbeitung der einlaufenden Flanken erhöht sich entsprechend die Spanungsdicke signifikant. Die spanablaufende Zone wird auf der Spanfläche zu schneidkantenferneren Bereichen verlagert.

Besonders bevorzugt folgen die zusammenhängenden Flankenschnitte dem Verlauf einer zu erzeugenden Verzahnungsflanke (und nicht symmetrisch ausgehend von der Zahnlückenmitte beidseits in Richtung auf die zu erzeugenden Zahnflanken hin). Die Erfindung offenbart als eigenständig somit auch ein Verfahren zum Erzeugen einer Verzahnung, bei dem ein zu verzahnendes Werkstück und ein spanabhebendes Werkzeug wälzend einander zugestellt werden, bis jede Zahnlücke der Verzahnung zwischen den Verzahnungsflanken nach mehreren Durchgängen des Werkzeugs erzeugt ist, das sich dadurch auszeichnet, dass der Wälzbewegung eine Zusatzbewegung überlagert wird, durch welche die Erzeugung der Zahnlücke von der Seite einer Verzahnungsflanke zur Seite der anderen Verzahnungsflanke hin erfolgt.

In einer weiteren bevorzugten Ausführungsform ist vorgesehen, dass die erzeugte Verzahnungsflanke durch einen Flankenschnitt wenigstens eines Durchgangs der dem letzten Durchgang vorangehenden Durchgänge mitbestimmt ist. Die Führungen in Form der in den vorangegangenen Durchgängen erzeugten Flankenschnitte wird somit im wesentlichen auf die zu erzeugende Zahnflanke gelegt. Auf diese Weise wird erreicht, dass mehrere erzeugte Flankenschnitte die erzeugte Verzahnungsflanke mitbestimmen, insbesondere die von allen Durchgängen. Dann bildet jeder Durchgang eines Werkzeugs durch die Überlagerung der Zusatzbewegung einen Hüllschnitt einer Flanke, wobei die Zusatzbewegung im letzten Bearbeitungsschritt Null ist.

Letztere Flanke ist, entsprechend dem oben bereits gesagten, bevorzugt die bei der Bearbeitung nachlaufende Flanke, auch auslaufende Flanke genannt.

Die Zusatzbewegung selbst wird bevorzugt aus einer Berechnung eines Versatzes zwischen der durch die Wälzbewegung begründeten Lage des Werkstücks und der Lage der Verzahnungsflanke bestimmt. Dies kann beispielsweise dadurch geschehen, dass der idealen Wälzbewegung ein Offset als Korrekturparameter vorgegeben wird, dessen Informationsgehalt den bei der Zustelltiefe des Durchgangs abhängigen Abstand der zu erzeugenden Zahnflanke von der Zahnlückenmitte beinhaltet. Dieser Offset wird dann im jeweils neuen Durchgang angepasst. Erfolgt im Bearbeitungsverfahren eine sich kontinuierlich ändernde Zustellung, wird der Offset zu einer kontinuierlichen Funktion der Zustelltiefe, beispielsweise wenn die Zustellung beim Wälzstoßen in Form einer Vorschubspirale erfolgt.

Hinsichtlich der Art der Zusatzbewegung sind mehrere Varianten möglich. Zum einen wird es bevorzugt, dass für die Erzeugung der Zusatzbewegung eine Änderung der relativen Phasenlage zwischen einer Wälzdrehbewegung des Werkstücks um seine Werkstückdrehachse und einer Wälzdrehbewegung des Werkzeugs um seine Werkzeugdrehachse angewendet wird. Diese vereinfacht als "Zusatzdrehung" bezeichnete Zusatzbewegung hängt somit ebenfalls von der Zustelltiefe ab. Sind Flankenmodifikationen gewünscht, könnte dieser zustellungsabhängigen Zusatzdrehung beispielsweise noch ein Offset auf die Wälzkopplung überlagert werden, welche hinsichtlich anderer Parameter variiert, und mit der die Zahnflankenmodifikationen erreicht werden.

Alternativ und/oder zusätzlich kann für die Erzeugung der Zusatzbewegung eine zu einer Wälzdrehbewegung des Werkstücks um seine Werkstückdrehachse tangentiale relative Linearbewegung zwischen dem Werkzeug und dem Werkstück herangezogen werden. Je nach Art der Änderung der Zustellung entspricht diese relative Linearbewegung einer durchgangsabhängig gewählten Tangentialverschiebung hinsichtlich der Relativlage zwischen Werkzeug und Werkstückachse, im kontinuierlichen Fall einer zustellungstiefenabhängigen kontinuierlichen Linearbewegung.

Hinsichtlich der gewählten Zustelltiefen im jeweiligen Durchgang könnte grundsätzlich eine äquidistante Zustellung gewählt werden. Bevorzugt wird die gegenseitige Zustellung zwischen dem Werkzeug und dem Werkstück jedoch in Abhängigkeit von dem Zeitspanvolumen gesteuert. Ist beispielsweise ein maximales Zeitspanvolumen vorgegeben, ergibt sich aus der beabsichtigten Verfahrensführung die nächste maximale Zustelltiefe und die zu der gleich oder kleiner der maximalen Zustelltiefe gewählten nächsten Zustelltiefe der dazugehörige Offset.

Bevorzugte Anwendungen des Verfahrens liegen auf dem Gebiet des Wälzstoßverfahrens und des Wälzschälverfahrens.

Ebenfalls wird von der Erfindung ein Computerprogrammprodukt gemäß Anspruch 13 unter Schutz gestellt.

Desweiteren ist vorrichtungstechnisch auch eine Verzahnungsmaschine gemäß Anspruch 14 unter Schutz gestellt, insbesondere eine Wälzstoßmaschine oder Wälzschälmaschine. Unter Wälzstoßmaschine (Wälzschälmaschine) ist hier eine Maschine zu verstehen, die jedenfalls auch Wälzstoß(schäl)verfahren gestattet, und nicht nur eine Maschine, die ausschließlich dazu ausgelegt ist.

Weitere Merkmale, Einzelheiten und Vorteile der Erfindung ergeben sich aus der nachfolgenden Beschreibung mit Bezug auf die beiliegenden Figuren, von denen
- Fig. 1a bis 1f: schematisch eine zeitliche Abfolge der mit dem erfindungsgemäßen Verfahren erzeugten, jeweils in einem Bild gemeinsam dargestellten diskreten Wälzstellungen zeigen,
- Fig. 2: schematisch die sich nach jeweiligen Durchgängen ergebenden Schnittflächen und Zahnlücken zum besseren Vergleich mit Fig. 3 zeigt, und
- Fig. 3: eine Fig. 2 entsprechende Darstellung der Schnittflächen und Zahnlücken gemäß dem Stand der Technik zeigt

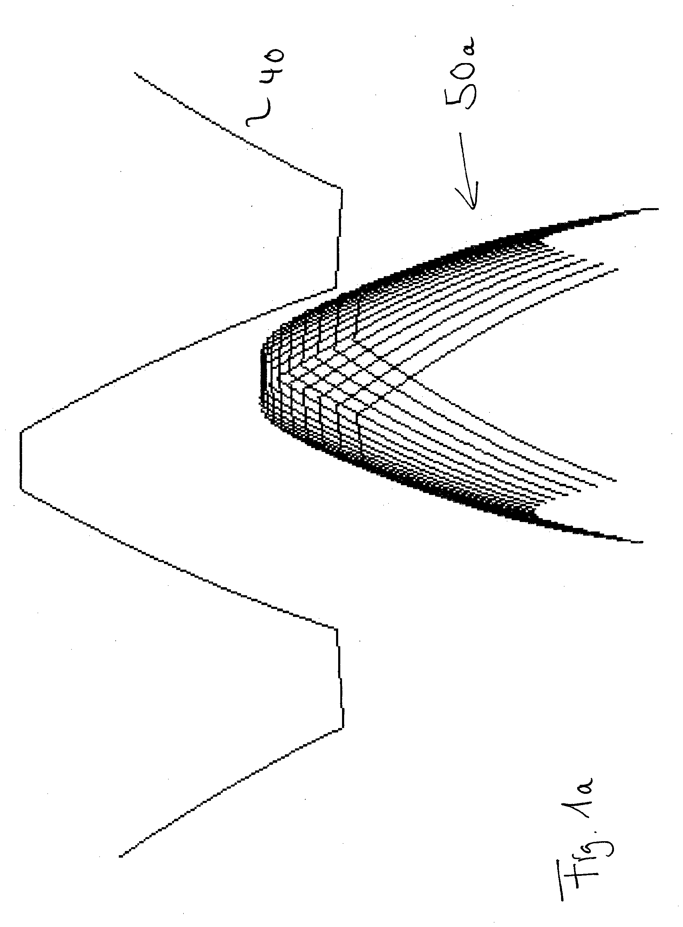

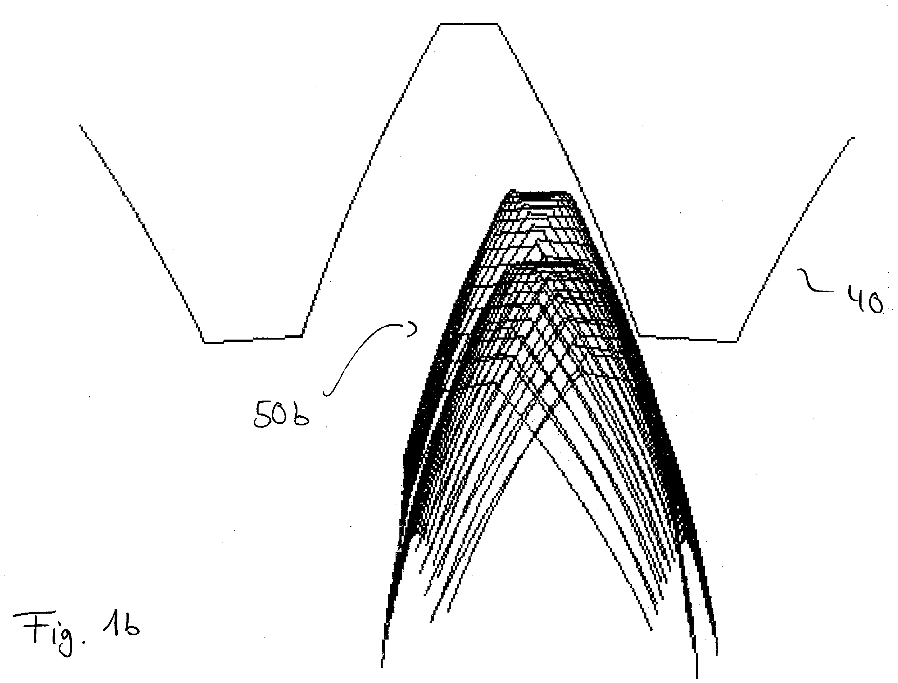

In den Figuren 1a bis 1f sind neben dem schematisch eingezeichneten Werkzeug 40 diskrete Wälzstellungen 50a bis 50f eines Zahns einer zu erzeugenden Verzahnung dargestellt, wie sie etwa bei einem mit dem erfindungsgemäßen Verfahren ausgeführten Wälzstoßen auftreten können. Dabei sind in den Figuren 1b bis 1f auch noch die diskreten Wälzstellungen der vorangegangenen Durchgänge dargestellt. Aufgrund der relativen Änderungen der Wälzstellungen eines Durchgangs gegenüber den des vorangegangenen Durchgangs ist erkennbar, dass sich die Durchgänge durch einen von einer Zusatzbewegung hervorgerufenen, der idealen Wälzbewegung auferlegten Offset unterscheiden. So sind nicht eingezeichnete Symmetrieachsen zu den jeweilig dargestellten Bündeln 50a, 50b, 50c, 50d, 50e, 50f der Wälzstellungen tangential voneinander beabstandet. Dieser Offset wird derart eingestellt, dass die bei der Eintauchbewegung des Werkzeugs in aufeinanderfolgenden Durchgängen erzeugten Flankenschnitte an der nachlaufenden Flanke zusammenhängen.

Die Spanleistung wird daher werkzeugseitig im wesentlichen nur von den Schneidkanten erbracht, welche die einlaufende Verzahnungsflanke erzeugen, dem Kopfkantenschnitt sowie den Bereich der die nachlaufende Verzahnungsflanke erzeugenden Schneidkanten, die kopfschneidkantennah angeordnet sind. Mit anderen Worten ergibt sich bei einem Auftrag der Spandicke der bei der Bildung einer Zahnlücke auftretenden Späne über der Schneidkantenlänge eines Werkzeugzahns wenigstens im kopfschneidkantenfernen Bereich eine deutlich ausgeprägte Asymmetrie. Quantitativ kann diese 100 Prozent oder mehr betragen, insbesondere sogar mehrere 100 Prozent.

Der letzte Bearbeitungsdurchgang wird in diesem Ausführungsbeispiel als Schlichtdurchgang mit gegenüber dem zuvor erfolgten Bearbeitungsgang veränderter Zusatzbewegung ausgeführt, die absolut gegenüber der idealen Wälzbewegung den Wert Null annehmen kann.

Wie durch Begutachtung der bei dem Verfahren anfallenden Späne auch experimentell überwacht werden kann, werden nur noch eine geringe Anzahl von U-Spänen erzeugt. Das Maximum der Verteilung der erzeugten Späne stellen die L-Späne dar. Insgesamt ergibt sich eine niedrigere Belastung für das Werkzeug und somit höhere Werkzeugstandzeiten.

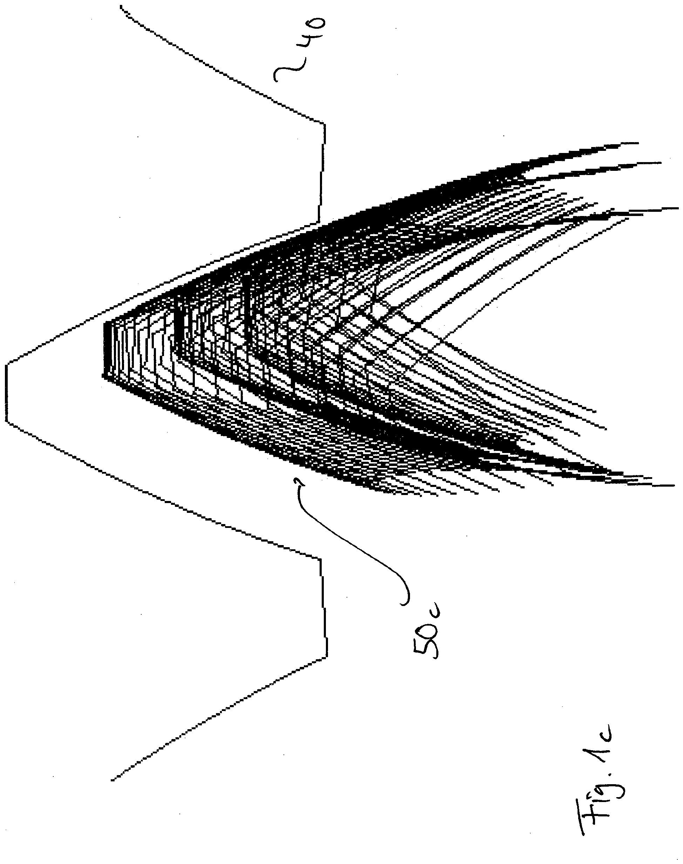

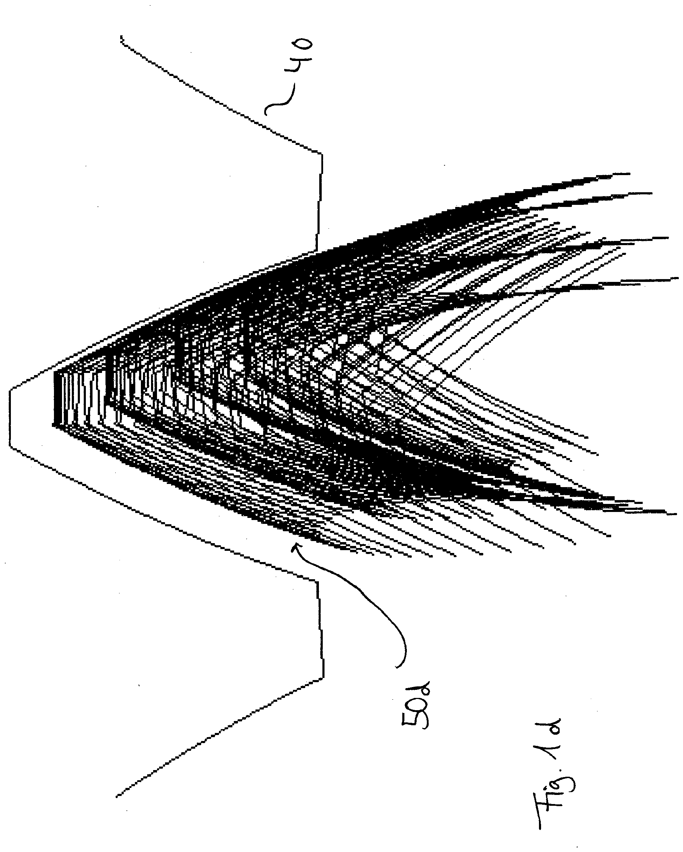

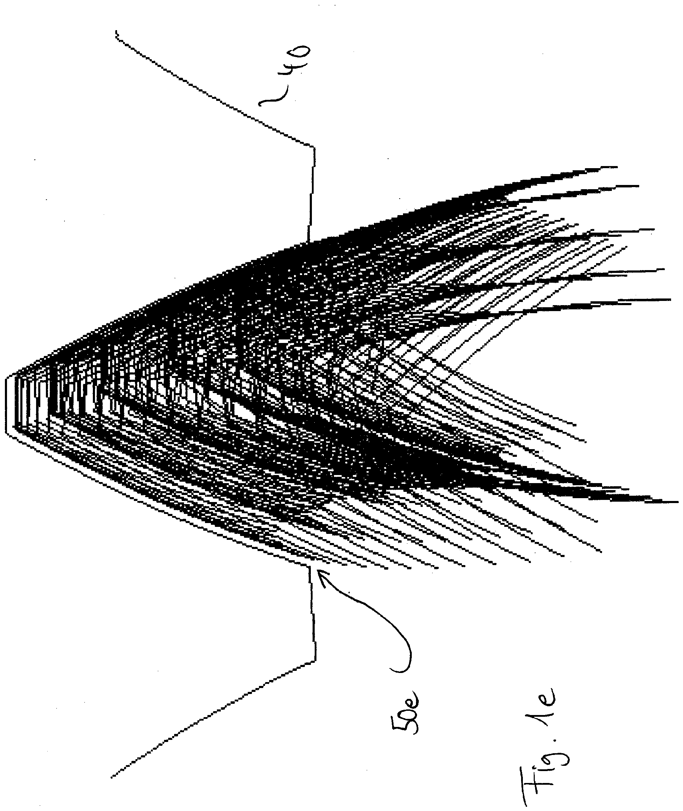

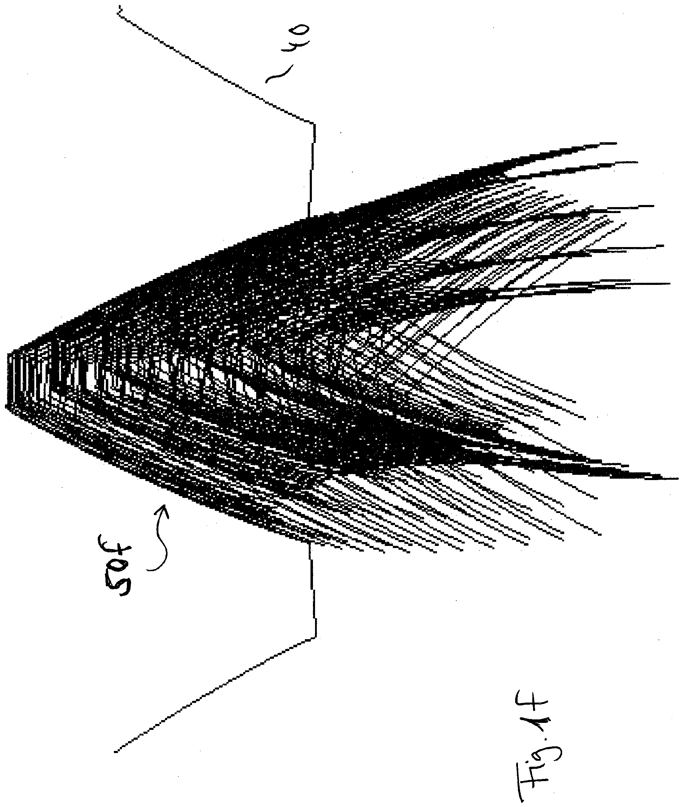

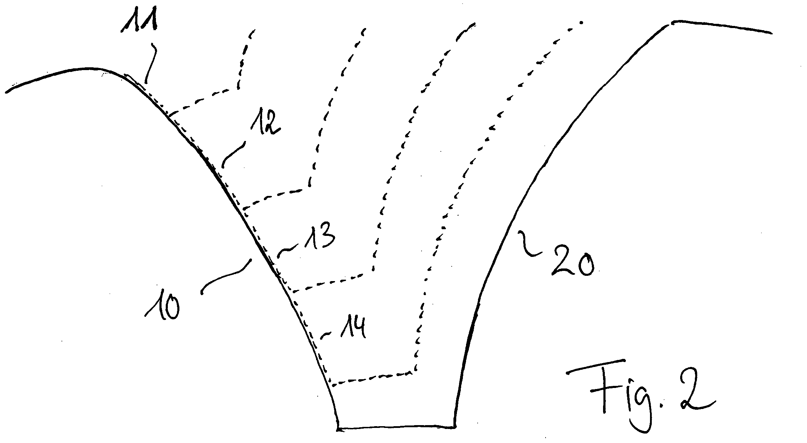

In Fig. 2 ist schematisch nochmals die aufeinanderfolgende Bildung der Lücken der einzelnen Durchgänge (in Fig. 2 sind es fünf Durchgänge) dargestellt, um den unterschiedlichen Verlauf der Schnittflächen, insbesondere der Flankenschnitte 11, 12, 13, 14 gegenüber den jeweiligen Flankenschnitten 31 der Schnittflächen 30.1, 30.2,... von Fig. 3 zu verdeutlichen. Während in Fig. 3 die Schnittfläche eines nachfolgenden Durchgangs die des vorhergehenden Durchgangs im wesentlichen symmetrisch und beabstandet umschließt, ist in Fig. 1 ein solches beabstandetes Umschließen an einer Flanke nicht gegeben, da die Flankenschnitte zweier aufeinanderfolgender Durchgänge zusammenhängen. Desweiteren erkennt man, dass in Fig. 2 zur Flankenseite der zusammenhängenden Flankenschnitte 11 und 12, 12 und 13, 13 und 14,... letztere dem Verlauf der zu erzeugenden Verzahnungsflanke 10 folgen, so dass die zu erzeugende Zahnlücke nicht symmetrisch von der Mitte zu den Flanken hin gebildet wird, sondern von einer Flanke zur anderen Flanke hin. Der spanende Materialabtrag über die volle Länge der Schneidkante findet nur an der einlaufenden Flanke statt, mit im Vergleich zu Fig. 3 deutlich erhöhten Spandicken. Dies charakterisiert den unterschiedlichen Bearbeitungscharakter der im Rahmen dieser Erfindung offenbarten Lehre. Im letzten Durchgang stimmen die Maschineneinstellungen bezüglich der Achsbewegungen für die Erzeugung der Verzahnungsflanken für Fig. 2 und Fig. 3 überein, nicht aber der Spanungsabtrag aufgrund der unterschiedlichen Schnittflächen des vorherigen Durchgangs.

Im übrigen ist die Erfindung nicht auf das mit Bezug auf die Figuren 1a bis 1f dargestellte Beispiel des Wälzstoßens eingeschränkt. Vielmehr kann sie auch für andere spanabhebende wälzende Bearbeitungsverfahren eingesetzt werden, insbesondere für das Wälzschälen.

## Patentansprüche

1. Verfahren zum Erzeugen einer Verzahnung, bei dem ein zu verzahnendes Werkstück und ein spanabhebendes Werkzeug wälzend einander zugestellt werden, bis jede Flanke (10, 20) der Verzahnung nach mehreren Durchgängen des Werkzeugs erzeugt ist, wobei in jedem Durchgang eine mindestens einen Flankenschnitt (11, 12, 13, 14) aufweisende Schnittfläche am Werkstück erzeugt wird, wobei der Wälzbewegung eine Zusatzbewegung überlagert wird, durch welche die bei wenigstens zwei unmittelbar aufeinanderfolgenden Durchgängen erzeugten Flankenschnitte (11-12, 12-13, 13-14) zusammenhängen, **dadurch gekennzeichnet, dass** im letzten Werkzeugdurchgang die Erzeugung der Schnittfläche mit der Wälzbewegung ohne Zusatzbewegung erfolgt.

2. Verfahren nach Anspruch 1, bei dem wenigstens zwei derartige, in wenigstens drei unmittelbar aufeinanderfolgenden Durchgängen erzeugte zusammenhängende Flankenschnitte an der Seite der gleichen Flanke gebildet sind.

3. Verfahren nach Anspruch 1 oder 2, bei dem der/die zusammenhängende(n) Flankenschnitt(e) an den bei der Bearbeitung nachlaufenden Flanken gebildet ist/sind.

4. Verfahren nach einem der vorhergehenden Ansprüche, bei dem die zusammenhängenden Flankenschnitte dem Verlauf einer zu erzeugenden Verzahnungsflanke folgen und insbesondere die erzeugte Verzahnungsflanke durch einen Flankenschnitt wenigstens eines Durchgangs der dem letzten Durchgang vorangehenden Durchgänge mitbestimmt ist.

5. Verfahren nach Anspruch 4, bei dem die wenigstens eine erzeugte Verzahnungsflanke durch die Flankenschnitte aller Durchgänge bestimmt ist.

6. Verfahren nach Anspruch 4 oder 5, bei dem die erzeugte Verzahnungflanke eine bei der Bearbeitung nachlaufende Flanke (10) ist.

7. Verfahren nach einem der vorhergehenden Ansprüche, bei dem die Zusatzbewegung aus einer Berechnung eines Versatzes zwischen der durch die Wälzbewegung begründeten Lage des Werkstücks und der Lage der Verzahnungsflanke bestimmt wird.

8. Verfahren nach einem der vorhergehenden Ansprüche, bei dem für die Erzeugung der Zusatzbewegung eine Änderung der relativen Phasenlage zwischen einer Wälzdrehbewegung des Werkstücks um seine Werkstückdrehachse und einer Wälzdrehbewegung des Werkzeugs um seine Werkzeugdrehachse angewendet wird.

9. Verfahren nach einem der vorhergehenden Ansprüche, bei dem für die Erzeugung der Zusatzbewegung eine zu einer Wälzdrehbewegung des Werkstücks um seine Werkstückdrehachse tangentiale relative Linearbewegung zwischen dem Werkzeug und dem Werkstück angewendet wird.

10. Verfahren nach einem der vorhergehenden Ansprüche, bei dem die gegenseitige Zustellung zwischen dem Werkzeug und dem Werkstück in Abhängigkeit von dem Zeitspanvolumen gesteuert wird.

11. Verfahren nach einem der vorhergehenden Ansprüche, bei dem das Verfahren ein Wälzstoßverfahren ist.

12. Verfahren nach einem der Ansprüche 1 bis 10, bei dem das Verfahren ein Wälzschälverfahren ist.

13. Computerprogrammprodukt zur Steuerung einer Verzahnungsmaschine, welches, wenn auf einer Steuervorrichtung der Verzahnungsmaschine ausgeführt, die Verzahnungsmaschine derart steuert, dass ein Verfahren nach einem der vorhergehenden Ansprüche durchgeführt wird.

14. Verzahnungsmaschine, insbesondere Wälzstoßmaschine oder Wälzschälmaschine, deren Steuervorrichtung zur Steuerung der Maschine derart ausgestaltet ist, dass beim Betrieb der Verzahnungsmaschine ein Verfahren nach einem der Ansprüche 1 bis 12 ausgeführt wird.

## Claims

1. A method for generating gear teeth, wherein a workpiece which is to receive a toothed profile and a cutting tool are advanced towards each other in a rolling feed motion until each flank (10, 20) of the tooth profile has been generated after several passes of the tool, wherein in each pass a cut surface containing at least one flank cut (11, 12, 13, 14) is generated on the workpiece, wherein an auxiliary motion is superimposed on the rolling feed movement whereby the flank cuts (11-12, 12-13, 13-14) generated in at least two immediately consecutive passes are connected to each other,
**characterised in that** the generation of the cut surface in the last tool pass with the rolling feed movement is carried out without the auxiliary movement.

2. The method according to claim 1, wherein at least two such connected flank cuts which are produced by at least three immediately consecutive passes are formed on the side of the same flank.

3. The method according to claim 1 or 2, wherein the connected flank cut(s) is/are formed on the tooth flanks that are on the trailing side in the machining process.

4. The method according to one of the preceding claims, wherein the connected flank cuts follow the profile of a gear tooth flank that is to be generated, and wherein in particular the tooth flank to be generated is in part determined by a flank cut of at least one of the passes preceding the last pass.

5. The method according to claim 4, wherein the at least one tooth flank being generated is determined by the flank cuts of all the passes.

6. The method according to claim 4 or 5, wherein the tooth flank being generated is a flank (10) that lies on the trailing side in the machining process.

7. The method according to one of the preceding claims, wherein the auxiliary motion is determined from a calculation of an offset between the position that the workpiece would occupy based on the rolling feed motion and the position of the tooth flank.

8. The method according to one of the preceding claims, wherein the auxiliary motion is effected by introducing a change in the relative phase relationship between a rolling rotation of the workpiece around its axis of rotation and a rolling rotation of the tool around its axis of rotation.

9. The method according to one of the preceding claims, wherein the auxiliary movement is effected by introducing a linear relative movement between the tool and the workpiece which runs tangential to a rolling rotation of the workpiece around its axis of rotation.

10. The method according to one of the preceding claims, wherein the mutual feed motion of the tool and the workpiece is controlled dependent on a volume/time rate at which chips are generated.

11. The method according to one of the preceding claims, wherein the method is a gear-shaping method.

12. The method according to one of claims 1 to 10, wherein the method is a skiving method.

13. A computer program product for the control of a gear-cutting machine, which, when executed in a controller device of the gear-cutting machine, controls said gear-cutting machine such that a method according to one of the preceding claims is carried out.

14. A gear-cutting machine, in particular a gear-shaping machine or a skiving machine, whose controller device for controlling the machine is designed such that a method according to one of claims 1 to 12 is executed when the gear-cutting machine is operated.

## Revendications

1. Procédé de production de denture, dans lequel une pièce devant être pourvue d'une denture et un outil d'enlèvement de copeaux sont amenés à avancer l'un par rapport à l'autre selon un mouvement générateur jusqu'à ce que chaque flanc (10, 20) de la denture soit produit après plusieurs passes de l'outil, une surface de coupe présentant au moins une découpe de flanc (11, 12, 13, 14) étant produite sur la pièce à chaque passe, un mouvement supplémentaire se trouvant superposé audit mouvement générateur et permettant de rattacher les découpes de flanc (11-12, 12-13, 13-14) produites lors d'au moins deux passes successives,
**caractérisé en ce que** la production de la surface de coupe par le mouvement générateur s'effectue sans mouvement supplémentaire lors de la dernière passe de l'outil.

2. Procédé selon la revendication 1, dans lequel au moins deux desdites découpes de flanc rattachées produites en au moins trois passes immédiatement successives sont formées sur le côté du même flanc.

3. Procédé selon la revendication 1 ou 2, dans lequel la ou les découpes de flanc rattachées sont formées sur les flancs dits arrière lors de l'usinage.

4. Procédé selon l'une des revendications précédentes, dans lequel les découpes de flanc rattachées suivent le tracé d'un flanc de denture à produire et dans lequel notamment le flanc de denture à produire est codéterminé par une découpe de flanc d'au moins une des passes précédant la dernière passe.

5. Procédé selon la revendication 4, dans lequel l'au moins un flanc de denture produit est déterminé par les découpes de flanc de toutes les passes.

6. Procédé selon la revendication 4 ou 5, dans lequel le flanc de denture produit est un flanc (10) dit arrière lors de l'usinage.

7. Procédé selon l'une des revendications précédentes, dans lequel le mouvement supplémentaire est déterminé à partir d'un calcul d'un décalage entre la position de la pièce instaurée par le mouvement générateur et la position du flanc de denture.

8. Procédé selon l'une des revendications précédentes, dans lequel, pour la production du mouvement supplémentaire, on met en œuvre une modification de la position de phase relative entre un mouvement de rotation générateur de la pièce sur son axe de rotation et un mouvement de rotation générateur de l'outil sur son axe de rotation.

9. Procédé selon l'une des revendications précédentes, dans lequel, pour la production du mouvement supplémentaire, on met en œuvre, entre l'outil et la pièce, un déplacement linéaire relatif tangentiel à un mouvement de rotation générateur de la pièce sur son axe de rotation.

10. Procédé selon l'une des revendications précédentes, dans lequel l'avancée mutuelle entre l'outil et la pièce est commandée en fonction du taux d'enlèvement de matière.

11. Procédé selon l'une des revendications précédentes, ledit procédé étant un procédé de taillage par outil-pignon.

12. Procédé selon l'une des revendications 1 à 10, ledit procédé étant un procédé de skiving.

13. Produit-programme informatique permettant de commander une machine à tailler les dentures, lequel, lorsqu'il est exécuté sur un dispositif de commande de ladite machine à tailler les dentures, commande ladite machine à tailler les dentures de façon à mettre en œuvre un procédé selon l'une des revendications précédentes.

14. Machine à tailler les dentures, notamment machine à tailler par outil-pignon ou machine de skiving, dont le dispositif de commande est conçu de façon à mettre en œuvre un procédé selon l'une des revendications 1 à 12 lors de l'exploitation de ladite machine à tailler les dentures.
